# EUROPEAN PATENT APPLICATION

(11) **EP 4 613 085 A1**
(43) Date of publication of application: **10.09.2025**
(21) Application number: 24315086.9
(22) Date of filing: 08.03.2024
(51) Int. Cl.: A01B 79/00, G06V 20/10

(54) **MAPPING CROPS**

(71) Applicant: CNH Industrial France S.A.S., 91150 Morigny-Champigny (FR)
(72) Inventor: Evain, Sébastien, 91150 Morigny-Champigny (FR); Styblinski, Théo, 91150 Morigny-Champigny (FR)
(74) Representative: CNH Industrial IP Department

(57) **Abstract**

The present disclosure provides a computer-implemented method of mapping crops in a field including a plurality of rows of crops. The computer-implemented method comprises: receiving, from a positioning system, positions of a work vehicle moving along a route between the plurality of rows of crops, and, from a camera mounted to a side of the work vehicle, images of the respective rows; detecting, using a perception model, the crops from the images; determining a position of each detected crop using the positions of the work vehicle and a predetermined lateral distance from the work vehicle; and constructing a map of the detected crops using their positions.

## Description

### BACKGROUND OF THE INVENTION

The present invention relates to mapping crops. More specifically, the present invention relates to computer-implemented methods of mapping crops in a field in which work vehicles operate, transitory, or non-transitory, computer-readable media, and work vehicles.

Work vehicles may operate in fields which include crops arranged in a plurality of rows. The work vehicles may traverse a route between the respective rows back and forth.

In such instances, to map the crops, it is necessary to use two or more sensors that each detect the crops, and then map the positions of the crops using detections from both sensors. For example, stereoscopic cameras may be used to determine the depth of the crops. In addition, a camera and another sensor modality such as RADAR or LiDAR may be used.

Such sensor arrangements are typically only installed on modern, expensive equipment.

It is an aim of the present invention to improve on the prior art.

### SUMMARY OF THE INVENTION

According to an aspect of the present disclosure, there is provided a computer-implemented method of mapping crops in a field including a plurality of rows of crops, the computer-implemented method comprising: receiving, from a positioning system, positions of a work vehicle moving along a route between the plurality of rows of crops, and, from a camera mounted to a side of the work vehicle, images of the respective rows; detecting, using a perception model, the crops from the images; determining a position of each detected crop using the positions of the work vehicle and a predetermined lateral distance from the work vehicle; and constructing a map of the detected crops using their positions.

This method enables older, less sophisticated vehicles to map crops without being fitted with stereoscopic cameras, and/or other sensor modalities, e.g. RADAR and LiDAR. The mapping provides comprehensive data over time. The term "distance" may be understood to mean a proportion of an inter-row distance, an inter-row distance between a width of a row between respective rows of crops.

In an embodiment, constructing the map of the detected crops using their positions comprises: constructing a line of best fit from positions of detected crops in each row; and adjusting the positions of the detected crops to overlap the line of best fit. The overlapping may be achieved by a projection from a point cloud into a line in a 2D plan.

In an embodiment, constructing the map of the detected crops using their positions comprises: adjusting one or more of the lines of best fit to make the lines of best fit parallel; and/or adjusting one or more of the lines of best fit to make the lines of best fit equidistant apart.

In an embodiment, adjusting the one or more lines of best fit to make them parallel comprises: selecting one line of best fit as a reference, and adjusting all other lines of best fit to be parallel to the selected line of best fit.

In an embodiment, the selected line of best fit is associated with a row of crops that was detected first.

In an embodiment, the computer-implemented method further comprising: for each row, comparing a distance between detected crops to a distance threshold; and identifying a missing crop when a distance between adjacent detected crops is greater than the distance threshold.

In an embodiment, the computer-implemented method further comprising: calculating the distance threshold as an average distance between crops for the respective row.

In an embodiment, the average distance is a median distance.

In an embodiment, the predetermined lateral distance is a proportion of a distance between adjacent rows.

In an embodiment, the proportion of the distance between adjacent rows is around 1/4 of a distance between adjacent rows.

In an embodiment, the positions system is a global positioning system.

In an embodiment, the camera is a single camera mounted substantially perpendicular to a direction of forward travel of the work vehicle.

In an embodiment, the image detection model is a machine learning model trained to detect the crops from images.

According to an aspect of the disclosure, there is provided a transitory, or non-transitory, computer-readable medium, having instructions stored thereon, that when executed by one or more processors, cause the one or more processors to perform the computer-implemented method of any preceding aspect or embodiment.

According to an aspect of the disclosure, there is provided a work vehicle comprising: a positioning system; a camera; a processor; and storage, wherein the storage includes the non-transitory computer readable medium of the preceding aspect.

### BRIEF DESCRIPTION OF THE DRAWINGS

Embodiments of the present invention are best understood with reference to the accompanying figures, in which:
- Figure 1 shows a side view of a work vehicle, according to one or more embodiments;
- Figure 2 shows a plan view of a field including a plurality of rows of crops that the work vehicle operates in;
- Figure 3 shows a block diagram of a computer used for implementing one or more of the computer-implemented methods described herein, according to one or more embodiments;
- Figure 4 shows a graph plotting a global position of the work vehicle from Figure 1, and positions of crops detected by a camera of the work vehicle, according to one or more embodiments;
- Figure 5 shows a plan view of a plurality of detections of crops, according to one or more embodiments;
- Figure 6 shows a similar view to Figure 5 of the plurality of detections of crops within lines of best fit provided therethrough, and arranged in parallel, according to one or more embodiments;
- Figure 7 shows a similar view to Figure 6 of the lines of best fit with missing rows populated, according to one or more embodiments; and
- Figure 8 shows a flow chart summarizing a computer-implemented method of mapping crops in a field including a plurality of rows of crops, according to one or more embodiments.

### DETAILED DESCRIPTION OF THE DRAWINGS

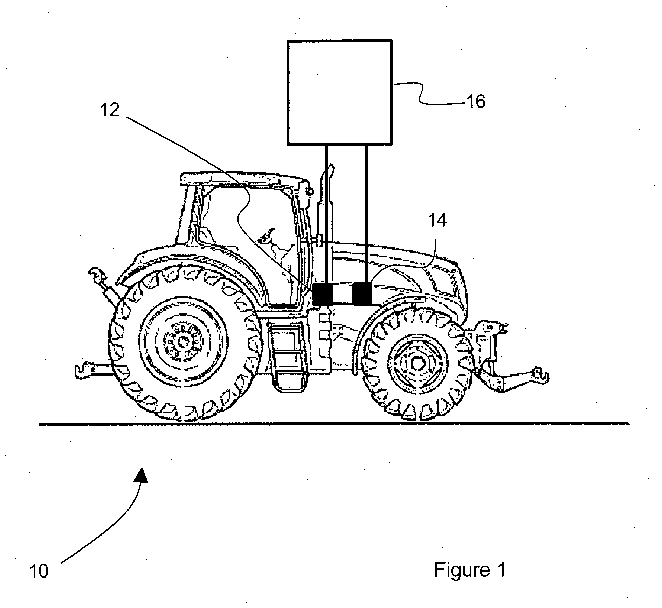

With reference to Figure 1, a work vehicle 10 includes a camera 12, a positioning system 14, and a computer 16.

The work vehicle 10 may be an agricultural vehicle such as a tractor.

The camera 12 may be a single camera. The camera 12 may be mounted on a side of the work vehicle 10. The camera 12 may be mounted to point perpendicular to a forward direction of travel of the work vehicle 10.

The positioning system 14 may be a global positioning system, GPS.

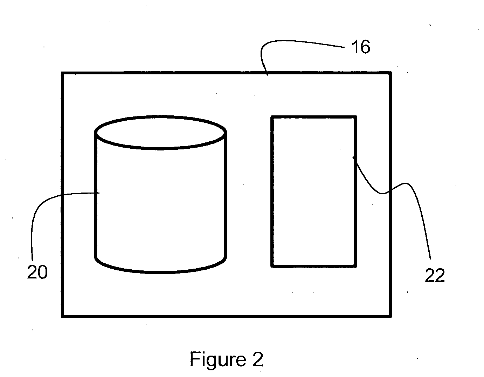

With reference to Figure 2, the computer 16 may include a processor 18 and storage 20 and may be configured to record images captured by the camera and GPS coordinates in the storage. The computer may be further responsible for mapping the crops or another computer may retrieve the images and GPS coordinates from the storage to perform the crop mapping remotely on another such computer. In this way, the storage of the computer, or the remote computer, acts as non-transitory, computer-readable medium, having instructions stored thereon, that when executed by one or more processors, cause the one or more processors to perform the computer-implemented method described herein. When storing the instructions to the storage, they may be in the form of transitory computer readable media, e.g. a download signal.

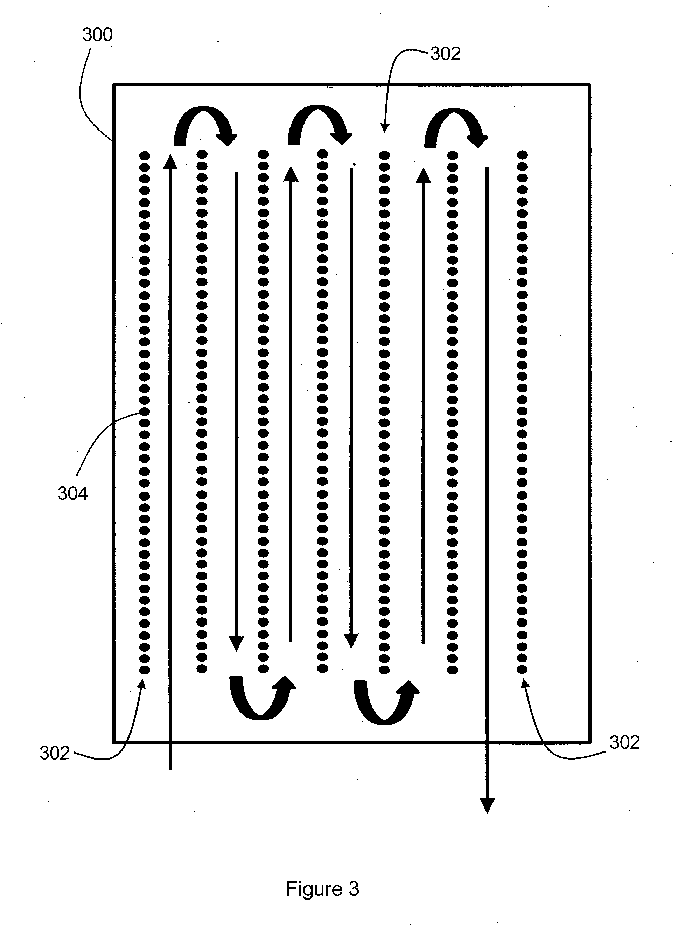

With reference to Figure 3, a field 300 includes a plurality of rows 302. Each row includes a plurality of crops 304. In order to map the crops 304, the work vehicle 10 traverses a route. The route involves the work vehicle moving long the route between the plurality of rows of crops.

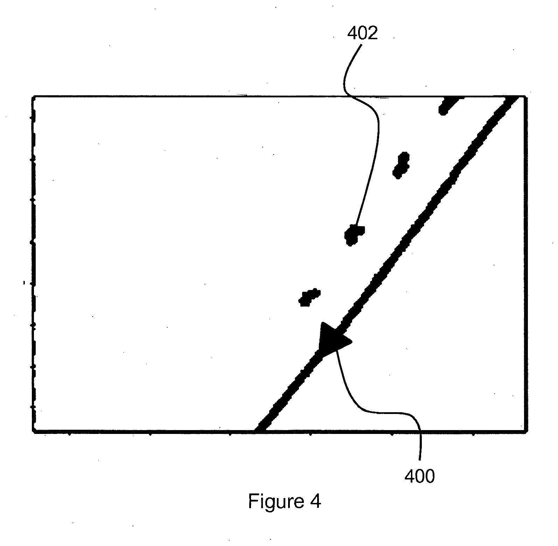

With reference to Figure 4, the method comprises receiving, from a positioning system, positions 400 of the work vehicle moving along the route between the plurality of rows of crops, and, from the camera mounted to the side of the work vehicle, images of the respective rows. The method also includes detecting, using a perception model, the crops from the images. The perception model is stored as electronic data in the storage of the computer executing the method. The perception model may be a machine learning model, such as a neural network. The perception model has been trained to detect crops from amongst other objects in images in a conventional manner.

The method also includes determining a position 402 of each detected crop using the positions of the work vehicle and a predetermined lateral distance from the work vehicle. The predetermined lateral distance is a proportion of a distance between adjacent rows. the proportion of the distance between adjacent rows is around 1/4 of a distance between adjacent rows. This may be because the work vehicle is assumed to travel along a center line between rows and has a width equal to about 1/3=4 of the distance between adjacent rows.

There are multiple positions for each crop in Figure 4. This is because a position is determined for each image in which a crop has been detected. The method may include clustering the positions for each crop using a clustering algorithm.

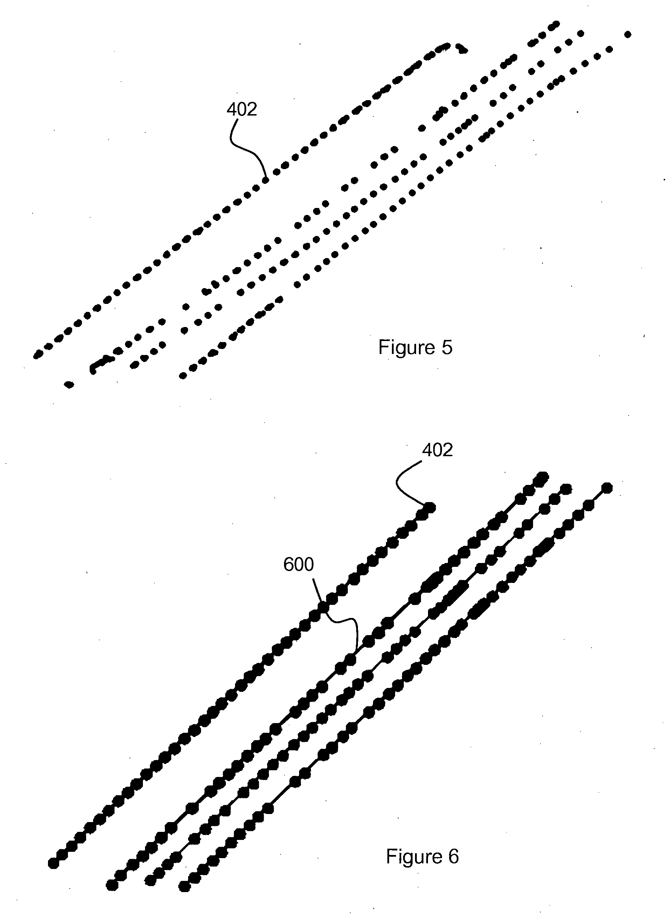

With reference to Figures 5 to 7, the method comprises constructing a map of the detected crops using their positions 402. The method may also comprise sending a signal indicating the map so that the map can be displayed by an operator on a display device.

With specific reference to Figure 6, constructing the map of the detected crops using their positions comprises: constructing a line of best fit 600 from positions of detected crops in each row; and adjusting the positions of the detected crops to overlap the line of best fit. In addition, constructing the map of the detected crops using their positions comprises: adjusting one or more of the lines of best fit to make them parallel. Adjusting the one or more lines of best fit to make them parallel comprises: selecting one line of best fit as a reference, and adjusting all other lines of best fit to be parallel to the selected line of best fit. The selected line of best fit is associated with a row of crops that was detected first. However, in other embodiments another line may be selected as the reference line. In any case, the reference line may be arbitrarily selected.

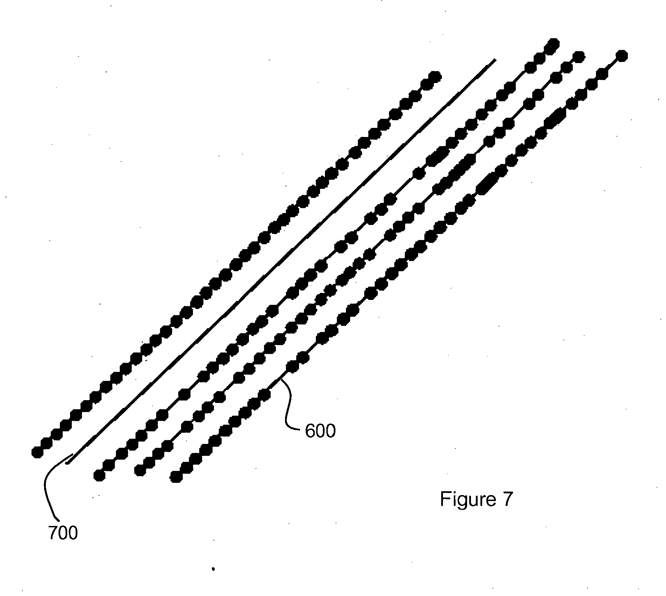

With specific reference to Figure 7, distances between the lines of best fit may be adjusted to be equal. In doing so, lines may be introduced for any missing rows 700.

The method may further comprise: for each row, comparing a distance between detected crops to a distance threshold; and identifying a missing crop when a distance between adjacent detected crops is greater than the distance threshold. The method may further comprise: calculating the distance threshold as an average distance between crops for the respective row. The average distance is a median distance. It is preferable to use the median distance because a mean distance will be too heavily influenced by a large number of missing crops due to the number of crops in each row being comparatively large.

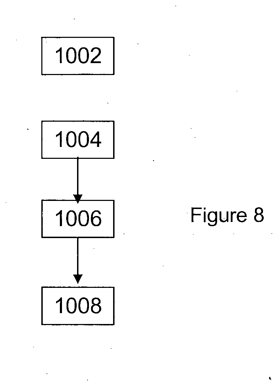

With reference to Figure 8, according to one or more embodiments, a computer-implemented method of mapping crops in a field including a plurality of rows of crops may be summarized as comprising: receiving 1002, from a positioning system, positions of a work vehicle moving along a route between the plurality of rows of crops, and, from a camera mounted to a side of the work vehicle, images of the respective rows; detecting 1004, using a perception model, the crops from the images; determining 1006 a position of each detected crop using the positions of the work vehicle and a predetermined lateral distance from the work vehicle; and constructing 1008 a map of the detected crops using their positions.

## Claims

1. A computer-implemented method of mapping crops in a field including a plurality of rows of crops, the computer-implemented method comprising:
receiving, from a positioning system, positions of a work vehicle moving along a route between the plurality of rows of crops, and, from a camera mounted to a side of the work vehicle, images of the respective rows;
detecting, using a perception model, the crops from the images;
determining a position of each detected crop using the positions of the work vehicle and a predetermined lateral distance from the work vehicle; and
constructing a map of the detected crops using their positions.

2. The computer-implemented method of Claim 1, wherein constructing the map of the detected crops using their positions comprises:
constructing a line of best fit from positions of detected crops in each row; and
adjusting the positions of the detected crops to overlap the line of best fit.

3. The computer-implemented method of Claim 2, wherein constructing the map of the detected crops using their positions comprises:
adjusting one or more of the lines of best fit to make the lines of best fit parallel; and/or
adjusting one or more of the lines of best fit to make the lines of best fit equidistant apart.

4. The computer-implemented method of Claim 3, wherein adjusting the one or more lines of best fit to make them parallel comprises:
selecting one line of best fit as a reference, and adjusting all other lines of best fit to be parallel to the selected line of best fit.

5. The computer-implemented method of Claim 4, wherein the selected line of best fit is associated with a row of crops that was detected first.

6. The computer-implemented method of any preceding claim, further comprising:
for each row, comparing a distance between detected crops to a distance threshold; and
identifying a missing crop when a distance between adjacent detected crops is greater than the distance threshold.

7. The computer-implemented method of Claim 6, further comprising:
calculating the distance threshold as an average distance between crops for the respective row.

8. The computer-implemented method of Claim 7, wherein the average distance is a median distance.

9. The computer-implemented method of any preceding claim, wherein the predetermined lateral distance is a proportion of a distance between adjacent rows.

10. The computer-implemented method of Claim 9, wherein the proportion of the distance between adjacent rows is around 1/4 of a distance between adjacent rows.

11. The computer-implemented method of any preceding claim, wherein the positions system is a global positioning system.

12. The computer-implemented method of any preceding claim, wherein the camera is a single camera mounted substantially perpendicular to a direction of forward travel of the work vehicle.

13. The computer-implemented method of any preceding claim, wherein the image detection model is a machine learning model trained to detect the crops from images.

14. A transitory, or non-transitory, computer-readable medium, having instructions stored thereon, that when executed by one or more processors, cause the one or more processors to perform the computer-implemented method of any preceding claim.

15. A work vehicle comprising:
a positioning system;
a camera;
a processor; and
storage, wherein the storage includes the non-transitory computer readable medium of Claim 14.
